# FASCICULE DE BREVET EUROPEEN

(11) **EP 1 218 847 B1**
(45) Date de publication et mention de la délivrance du brevet: **02.09.2009**
(21) Numéro de dépôt: 99949043.6
(22) Date de dépôt: 05.10.1999
(51) Int. Cl.: G08G 1/127, G06Q 30/00

(54) **PROCEDE ET DISPOSITIF POUR LA MISE EN RELATION D'UNE OFFRE DE SERVICE DE TRANSPORT AVEC UNE DEMANDE D'UN TEL SERVICE**
VERFAHREN UND ANORDNUNG ZUR VERMITTLUNG VON MITFAHRGELEGENHEITSANGEBOTEN UND -GESUCHEN
METHOD AND DEVICE FOR INTERACTIVE COMMUNICATION BETWEEN A TRANSPORT SERVICE OFFER AND A REQUEST FOR SAME

(43) Date de publication de la demande: 03.07.2002
(73) Titulaire: Braunwald, Pierre, 91190 Villiers le Bacle (FR)
(72) Inventeur: Braunwald, Pierre, 91190 Villiers le Bacle (FR)
(74) Mandataire: de Saint-Palais, Arnaud Marie
(86) Numéro de dépôt international: PCT/FR1999/002369
(87) Numéro de publication internationale: WO 2001/025980

(56) Documents cités:
- EP-A- 0 837 587
- EP-A- 0 859 346
- WO-A-89/05496
- FR-A- 2 770 669
- US-A- 4 212 069
- US-A- 4 360 875
- WALBRIDGE: "Real Time Ridesharing Using Wireless Pocket Phones to Access the Ride Matching Computer" PACIFIC RIM TRANSTECH CONFERENCE - 1995 VEHICLE NAVIGATION AND INFORMATION SYSTEMS CONFERENCE PROCEEDINGS - 6TH INTERNATIONAL VNIS - A RIDE INTO THE FUTURE, 30 juillet 1995 (1995-07-30) - 2 août 1995 (1995-08-02), pages 486-492, XP002105805 Seattle, WA, US

## Description

La présente invention concerne un procédé pour la mise en relation d'une offre de service de transport avec une demande de ce service.

Elle s'applique notamment, mais non exclusivement, au transport des personnes en automobile.
A l'heure actuelle, on peut constater que la plupart des grandes zones urbaines doivent faire face à des flux de circulation automobile toujours croissants qui entraînent des encombrements importants des voies de circulation, un accroissement de la pollution de l'air, et des problèmes de stationnement des véhicules. Il en résulte des gaspillages énormes en énergie, en temps, et en frais de santé dus à la pollution. Il s'avère par ailleurs que la plupart des automobiles encombrant les voies de circulation des grandes zones urbaines ne sont occupées que par leur conducteur qui se déplace entre son domicile et son lieu de travail, bien qu'elles puissent transporter au moins trois passagers supplémentaires.

Pour résoudre ce problème, on a déjà pensé à inciter les personnes à ce qu'on appelle le co-voiturage qui consiste à se regrouper pour se déplacer, notamment entre domicile et lieu de travail. Toutefois, cette solution n'a jamais eu beaucoup de succès pour différentes raisons.

D'une part, les personnes souhaitant malgré tout utiliser leur automobile ne sont pas disposées à prendre n'importe quel passager de peur des risques d'agression,
et ne sont par ailleurs pas incitées, par exemple financièrement, à prendre des passagers.

D'autre part, les personnes recherchant un moyen de transport pour se déplacer régulièrement entre leur domicile et leur lieu de travail n'ont pas la possibilité de connaître facilement des automobilistes qui empruntent le même trajet, aux mêmes heures et qui sont disposés à emmener un passager, et ne sont pas forcément disposées à se plier aux horaires de l'automobiliste qui les transporte. Cette solution n'offre donc pas de souplesse en ce qui concerne les horaires de déplacement, et pas davantage en ce qui concerne les trajets. En outre, lorsque ces personnes sont prises en charge par un automobiliste, elles se trouvent dans l'incertitude de l'heure exacte de leur prise en charge, ce qui est dissuasif lorsqu'elles ont des horaires stricts à respecter.

Pour limiter la pollution dans certains milieux urbains, on a déjà limité la circulation automobile soit en imposant une circulation alternée par exemple en fonction du numéro minéralogique du véhicule, soit en interdisant les automobiles occupées par une seule personne à circuler. Toutefois, une telle mesure autoritaire ne peut être prise que temporairement, et une fois que son application est terminée, les personnes reprennent leurs habitudes en voyageant seules dans leur véhicule.

Pour tenter de résoudre ces problèmes, on a également proposé des systèmes de co-voiturage, tels que par exemple celui qui se trouve décrit dans le brevet US 4 360 875. Selon ce système de co-voiturage, les transporteurs sont équipés de terminaux spéciaux leur permettant de transmettre leurs offres de transport à un poste central. Des terminaux équivalents sont installés dans des lieux publics pour permettre aux voyageurs de transmettre au poste central leurs demandes de transport. Le poste central recherche ensuite les corrélations existant entre les offres et les demandes de transport et lorsqu'une offre correspond à une demande, il transmet en retour aux transporteur et voyageur concernés des informations permettant à ces derniers de se rencontrer.

Le document "Real Time Ridesharing Using Wireless Pocket Phones To Access The Ride Matching Computer" (Edward W. Waldbridge - Adjunct Research Associate National - Louis University Evanston IL -60201-1796) divulgue un système de co-voiturage basé sur l'utilisation d'un téléphone cellulaire mobile et d'un centre de traitement qui met en relation un transporteur et un voyageur. Les échanges s'effectuent ensuite directement entre ces deux personnes par l'intermédiaire de leurs téléphones cellulaires respectifs. Le transporteur choisi est celui dont les points de départ et d'arrivée sont respectivement situés dans les mêmes zones géographiques que les points de départ et d'arrivée du voyageur.

La présente invention a pour but d'accroitre la probabilité de trouver un couple voyageur/transporteur dans la plage de temps demandée de manière à inciter les personnes, d'un côté les voyageurs recherchant un transporteur, et de l'autre les transporteurs disposés à emmener un voyageur, à se regrouper pour leurs déplacements, notamment pour les trajets entre leur domicile et leur travail.

A cet effet, elle propose un procédé, comme dans le brevet US 4 360 875, pour la mise en relation d'une demande d'un service de transport émise par un voyageur avec une offre d'un tel service émise par un transporteur équipé d'un dispositif transmetteur téléphonique embarqué (10), ce procédé faisant intervenir un centre de supervision (1) comprenant un calculateur (2) relié à des moyens de transmission (3) de données et une mémoire de masse (4) pouvant être une base de données (4) d'abonnés dans laquelle chaque abonné est identifié, ledit procédé comprenant les étapes successives suivantes :
- (a) l'abonnement des transporteurs auprès du centre de supervision (1) et la mémorisation lors de cet abonnement dans la base de données (4), au moyen du calculateur (2), d'informations concernant les transporteurs désirant prendre des voyageurs sur l'un des itinéraires desdits transporteurs,
- (b) la transmission par un voyageur au calculateur (2) d'une demande de transport comprenant l'identification d'un lieu de départ et d'un lieu d'arrivée et d'une date et d'une heure de prise en charge souhaitée,
- (c) la constitution par le calculateur (2) d'une liste de transporteurs abonnés, susceptibles de satisfaire la demande de transport reçue,
- (d) la détermination, à partir de ladite liste, d'un transporteur pouvant prendre en charge la demande de transport,
- (e) la mise en communication du voyageur avec ce transporteur trouvé pour fixer un lieu et une date de rendez-vous avec ce dernier,
- (f) lors de la rencontre entre ce transporteur trouvé et le voyageur, la détermination de la distance parcourue et du prix du trajet que doit payer le voyageur au transporteur en fonction des lieux de départ et de destination de la demande de transport,

Selon l'invention, ce procédé est **caractérisé en ce que** :
- lors de l'étape de détermination (d), l'appel dans l'ordre de la liste, des transporteurs qui figurent sur ladite liste et qui sont équipés de dispositifs embarqués (10) est effectué par le centre de supervision (1) jusqu'à ce qu'il trouve un transporteur qui accepte de satisfaire la demande de transport ; cette liste est établie en fonction :
   - de la date et de l'heure de prise en charge indiquées dans ladite demande de transport du voyageur,
   - du lieu de départ et du lieu d'arrivée de prise en charge indiqués dans ladite demande de transport du voyageur,
   - d'itinéraires habituels des transporteurs associés à des plages horaires et des sens de parcours de ces itinéraires, ces données étant comprises dans les informations concernant les transporteurs qui ont été communiquées lors de l'étape d'abonnement,
   - de la localisation périodique du dispositif transmetteur téléphonique embarqué (10) de chaque transporteur de ladite liste, le calculateur (2) déterminant la position du transporteur par rapport au point de rencontre prévu entre le transporteur et le voyageur, et l'estimation de l'heure de la prise en charge du voyageur par le transporteur,
      cette étape de détermination pouvant être répétée dans le cas où ledit transporteur trouvé et le voyageur ne parviennent pas à trouver un accord concernant les modalités du trajet ;
   en outre, chaque abonné est associé à au moins un tracé d'un itinéraire, et la base de données concernant les transporteurs comporte une liste d'itinéraires habituels associés à des plages horaires avec des sens de parcours de ces itinéraires.

Selon l'invention, ce procédé est **caractérisé en ce qu**'il comprend les étapes successives suivantes :
- l'abonnement préalable auprès d'un centre de supervision de transporteurs désirant être mis en relation avec des voyageurs, les transporteurs fournissant au centre de supervision une liste d'itinéraires habituels associés à des plages horaires et des sens de parcours de ces itinéraires,
- la mémorisation lors de leur abonnement dans la base de données au moyen du calculateur d'informations concernant des transporteurs désirant prendre des voyageurs sur l'un de leurs itinéraires, ces informations comprenant une liste d'itinéraires habituels associés à des plages horaires et des sens de parcours de ces itinéraires, fournis par les transporteurs,
- la transmission par un voyageur au calculateur d'une demande de transport comprenant l'identification d'un lieu de départ et d'un lieu d'arrivée et d'une date et heure de prise en charge souhaitée,
- la constitution par le calculateur d'une liste de transporteurs abonnés, susceptibles de satisfaire la demande de transport reçue, en fonction de la date et l'heure de prise en charge souhaitée, en utilisant les itinéraires associés à des plages horaires, figurant sur la base de données,
- la localisation périodique du dispositif embarqué de chaque transporteur de ladite liste, la détermination par le calculateur de la position du transporteur par rapport au point de rencontre prévu entre le transporteur et le voyageur, et l'estimation de l'heure de la prise en charge du voyageur par le transporteur,
- la détermination, à partir de ladite liste, du transporteur prenant en charge la demande de transport, cette détermination comprenant l'appel par le centre de supervision des transporteurs qui figurent sur la liste qui sont équipés à cet effet de téléphones portables, jusqu'à ce qu'il trouve un transporteur qui accepte de satisfaire la demande de transport,
- la mise en communication du voyageur avec le premier transporteur trouvé pour fixer un lieu et une date de rendez-vous avec ce dernier,
- lors de la rencontre entre le transporteur déterminé et le voyageur, la détermination de la distance parcourue et du prix du trajet que doit payer le voyageur au transporteur en fonction des lieux de départ et de destination de la demande de transport.

Grâce à ces dispositions, les personnes qui souhaitent proposer des places dans leur véhicule à un moment donné, les transporteurs, et les personnes qui cherchent de telles places, les voyageurs, peuvent facilement se rencontrer. D'une part, en transportant d'autres personnes, les transporteurs peuvent bénéficier de revenus supplémentaires permettant notamment de réduire leur coût de transport et les charges d'entretien de leur véhicule. Ils peuvent ainsi également échapper aux mesures autoritaires de réduction de la circulation en cas de pollution importante.
D'autre part, par rapport aux transports en commun qui sont généralement bondés aux heures de pointe, les voyageurs bénéficient d'un confort accru et de la souplesse de la voiture individuelle qui peut effectuer un trajet souvent plus direct, et surtout sans changement de moyen de transport.

Selon une particularité de l'invention, la détermination du transporteur qui prendra en charge la demande de transport comprend l'appel par le centre de supervision des transporteurs figurant sur la liste qui sont équipés à cet effet de téléphones portables, jusqu'à ce qu'il trouve un transporteur en mesure de satisfaire la demande de transport, et la mise en communication du voyageur avec le premier transporteur trouvé pour fixer un lieu et une date de rendez-vous avec ce dernier.

A cet effet, une liste de points de rencontre peut ainsi être préétablie et fournie aux transporteurs et aux voyageurs abonnés.

Alterntivement, le véhicule de chaque transporteur abonné est équipé d'un dispositif embarqué comprenant un transmetteur radiotéléphonique, le procédé comprenant en outre le déclenchement par le transporteur de l'émission par le transmetteur vers le centre de supervision, d'un message contenant une information d'identification du transporteur disposé à prendre en charge une demande de transport, un numéro d'itinéraire prédéterminé, ainsi qu'un sens de parcours de l'itinéraire, la détermination du transporteur qui prendra en charge la demande de transport comprenant la transmission par le centre de supervision de la demande de transport reçue à l'ensemble des transporteurs qui figurent dans la liste élaborée par le centre de supervision, l'affichage sur un afficheur associé au transmetteur radiotéléphonique d'un message décrivant la demande de transport, le déclenchement par l'un des transporteurs ayant reçu la demande de transport de la transmission au centre de supervision d'un message indiquant qu'il prend en charge la demande de transport, et la transmission par le centre de supervision au voyageur d'un point et d'une heure estimée de rencontre, ainsi que des informations permettant de reconnaître le transporteur qui le prend en charge.

Avantageusement, le procédé selon l'invention comprend la localisation des transporteurs abonnés figurant sur la liste, le retrait de la liste des transporteurs ayant déjà dépassé le lieu de départ de la demande de transport ou ne se trouvant pas sur l'itinéraire déclaré, le classement des transporteurs de la liste en fonction de la distance entre la position de ceux-ci et la position du lieu de départ, et l'appel par le centre de supervision des transporteurs de la liste dans l'ordre de classement de la liste jusqu'à ce qu'un transporteur réponde à l'appel.

Grâce à cette disposition, le voyageur peut également être informé par le centre de supervision de la progression du transporteur qui le prend en charge.

Selon une autre particularité de l'invention, le centre de supervision est connecté à un service d'informations sur le trafic routier, le procédé comprenant en outre la détermination de l'heure de rencontre entre le transporteur et le voyageur en fonction de la position du transporteur par rapport au lieu de rendez-vous avec le voyageur et de la densité du trafic sur le trajet du transporteur. On peut également prévoir que le centre de supervision diffuse aux transporteurs actifs des messages d'alerte lorsque des bouchons se trouvent sur leur itinéraire, et éventuellement leur propose des itinéraires de contournement.

Selon une autre particularité de l'invention, le dispositif embarqué à bord de chaque véhicule de transporteur abonné est équipé d'un terminal de paiement par carte à puce, permettant au transporteur d'accepter les paiements par carte bancaire des trajets effectués par les voyageurs transportés.

Le montant à payer par le voyageur peut être affiché et mis à jour en permanence en fonction de la progression du véhicule, grâce aux informations de position fournies par le dispositif de localisation, ou par le compteur kilométrique du véhicule.

Selon encore une autre particularité de l'invention, le dispositif embarqué à bord de chaque véhicule de transporteur abonné comprend un touche permettant de déclencher l'émission vers le centre de supervision d'un message d'alarme en cas d'accident ou d'agression du transporteur par le voyageur.
Si le voyageur dispose d'un téléphone mobile, on peut également prévoir cette fonction pour le voyageur en cas d'agression du voyageur par le transporteur.

Selon encore une autre particularité de l'invention, si aucun transporteur n'est trouvé pour satisfaire une demande de transport, le procédé selon l'invention recherche une solution pour satisfaire la demande de transport en combinant un itinéraire de transporteur actif et un trajet sur une ligne de transport en commun.

La présente invention concerne également le dispositif mis en oeuvre par le procédé.

Un mode de réalisation du procédé selon l'invention sera décrit ci-après, à titre d'exemple non limitatif, avec référence aux dessins annexés dans lesquels
La figure 1 représente schématiquement le centre de supervision mis en oeuvre par le procédé selon invention ;
La figure 2 représente schématiquement le dispositif embarqué à bord de chaque véhicule de transporteur abonné, mis en oeuvre par le procédé selon l'invention ;
La figure 3 est un organigramme illustrant schématiquement les différentes étapes du procédé selon l'invention.

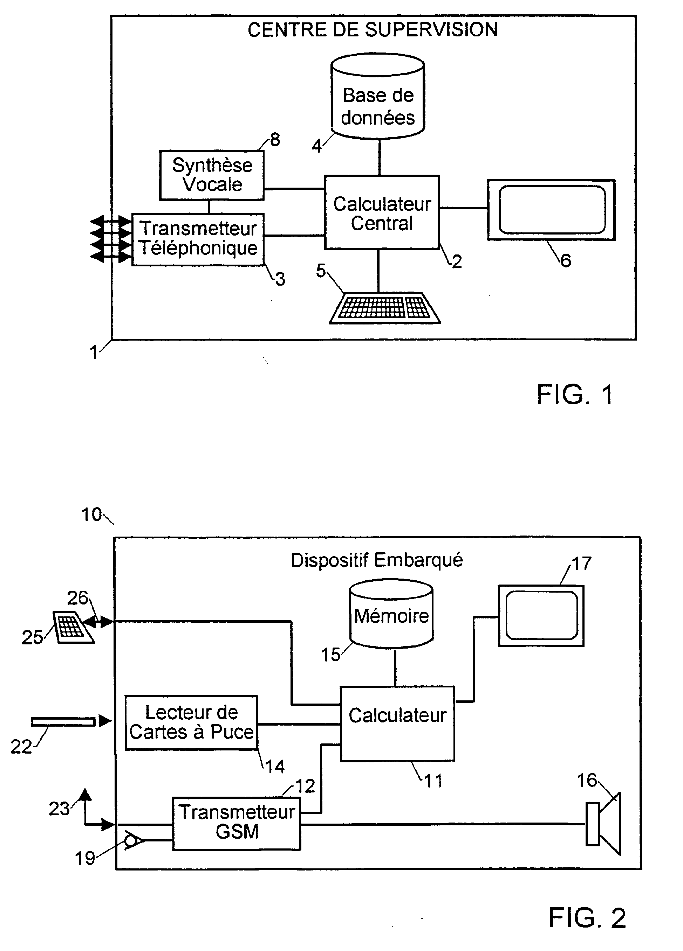

La figure 1 représente un centre de supervision 1 mis en oeuvre par le procédé selon l'invention, comprenant un calculateur 2, et connecté à celui-ci :
- un transmetteur radioélectrique ou téléphonique, de préférence capable de recevoir une grande quantité de messages numériques,
- une mémoire de masse 4 dans laquelle est stockée une base de données contenant toutes les informations relatives aux transporteurs abonnés,
- un clavier 5 et un écran 6.

D'après le procédé selon l'invention, toutes les personnes, appelées par la suite "transporteur", désirant offrir une place dans leur véhicule doivent préalablement s'abonner auprès du centre de supervision 1 et disposer d'un dispositif 10 installé à bord de leur véhicule. Sur la figure 2, ce dispositif 10 comprend dans un boîtier un calculateur 11, et connecté à celui-ci, une mémoire non volatile 15, un afficheur 17, par exemple à cristaux liquides, et un clavier 25 qui peut être avantageusement externe et relié au calculateur 11 par l'intermédiaire d'une liaison infrarouge 26.
Pour s'abonner, les transporteurs doivent fournir au centre de supervision 1 notamment des informations permettant de les identifier, ainsi qu'une liste décrivant les itinéraires les plus fréquemment parcourus associés respectivement à un numéro, des plages horaires hebdomadaires de départ, chaque plage horaire étant associée à un sens de parcours de l'itinéraire correspondant, ces informations étant stockées dans la base de données 4.

Ces informations peuvent être saisies et mises à jour soit par un opérateur du centre de supervision, soit directement par le transporteur au moyen d'un système télématique.
Pour faciliter la saisie de ces informations, il peut être constitué une liste de points de rencontre préétablie, chaque point de rencontre étant numéroté et associé à une adresse postale.
Ainsi, les itinéraires peuvent être saisis en introduisant les numéros des points de rencontre figurant dans la liste préétablie, se trouvant le long de l'itinéraire.

Avantageusement, ces informations, et en particulier les informations décrivant les itinéraires peuvent être introduites au moyen d'un ordinateur connecté au réseau Internet, celui-ci permettant d'accéder à des cartes géographiques ou des plans de circulation numérisés, à différentes échelles à l'aide desquels le transporteur peut décrire chacun de ses itinéraires en utilisant un moyen de contrôle d'un curseur, par exemple une souris, pour désigner le point de départ de l'itinéraire et déplacer le curseur le long de celui-ci.

On peut prévoir une procédure de validation des informations ainsi saisies, en les transmettant au transporteur abonné correspondant qui peut ainsi les vérifier.

Les voyageurs souhaitant être transportés, transmettent leur demande de transport par une liaison téléphonique au centre de supervision 1 en indiquant notamment les points de départ et de destination et l'heure de prise en charge souhaités. Cette demande peut être reçue et introduite dans le calculateur 2 par un opérateur, ou saisie également directement par le voyageur au moyen d'un système télématique, tel qu'un ordinateur relié au réseau Internet. On peut aussi prévoir à cet effet une procédure d'abonnement permettant de référencer tous les voyageurs utilisant le procédé.

Le voyageur peut décrire sa demande de transport, simplement en indiquant l'heure de départ souhaitée et lès numéros correspondant aux points de départ et de destination, fournis par la liste préétablie des points de rencontre. A cet effet, il peut être remis aux voyageurs et aux transporteurs abonnés, une carte géographique de circulation sur laquelle figurent tous les points de rencontre répertoriés avec leur numéro.

On peut également prévoir que les voyageurs doivent s'abonner au centre de supervision, de manière à être identifiés auprès de celui-ci. Dans ce cas, une demande de transport peut également comprendre un identifiant du voyageur, tel qu'un code d'identification qui est attribué au voyageur lors de son abonnement.

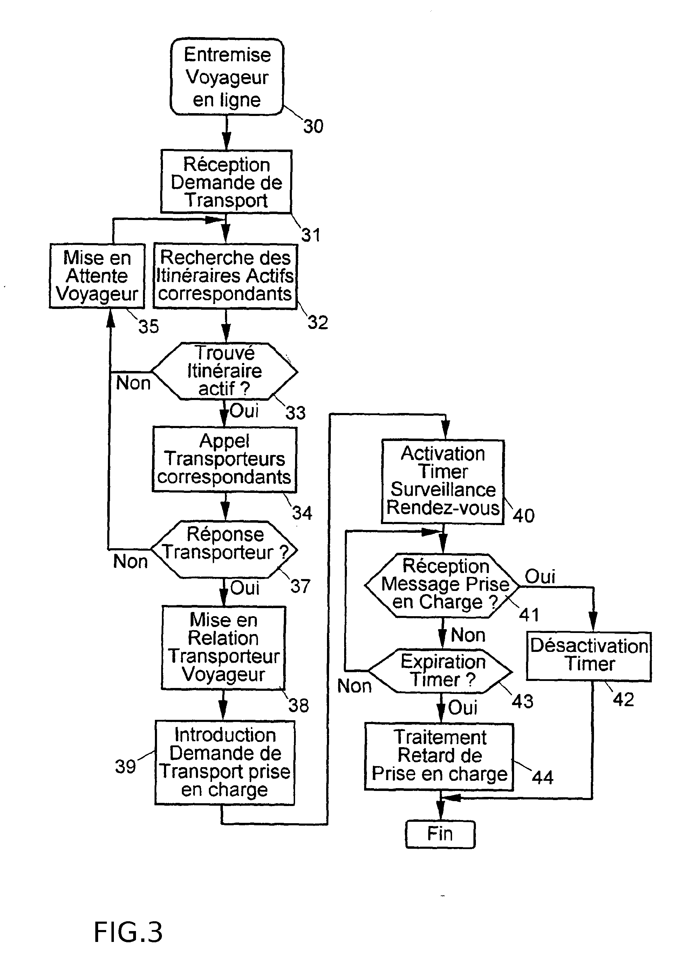

Lorsque le calculateur central 2 reçoit une demande de transport, il exécute un programme 30 tel que celui qui est illustré par la figure 3. A l'étape 31 de ce programme, le calculateur central 2 reçoit la demande de transport, puis à l'étape 32, il établit une requête à la base de données 4 pour rechercher tous les transporteurs qui peuvent satisfaire cette demande compte tenu de tous les itinéraires des transporteurs stockés dans la base de données et des plages horaires correspondantes, c'est-à-dire tous les itinéraires actifs compte tenu de la date et heure de prise en charge souhaitée par le voyageur.
Cette requête est appliquée à la base de données en vue d'obtenir une liste de transporteurs sélectionnés.

A cet effet, le calculateur 2 peut être doté d'un moteur de recherche de manière à pouvoir sélectionner des transporteurs dont l'itinéraire ne correspond pas tout à fait à la demande de transport, et élaborer des solutions plus complexes d' "entremise combinée" combinant des itinéraires de transporteur et des moyens de transport en commun, le calculateur ayant alors accès une base de données contenant la description des itinéraires, horaires et stations de tous les moyens de transports en commun existant dans la zone où il opère.
Dans ce cas, le calculateur sélectionne les itinéraires actifs passant par le point de départ ou de destination de la demande de transport à traiter et passant à proximité d'une station d'un transport en commun reliant une autre station se trouvant à proximité, selon le cas, du point de départ ou de destination demandés.

Les transporteurs sélectionnés sont avantageusement rangés dans la liste par ordre de pertinence vis-à-vis de la demande de transport, chaque transporteur dans la liste étant associé à la durée d'attente avant la date de rencontre prévue et, de préférence la durée prévue du trajet correspondant à la demande de transport.

On peut également prévoir que le calculateur 2 attribue une note de fiabilité aux transporteurs en fonction de leur ponctualité pour se rendre aux rendez-vous fixés avec les voyageurs. Dans ce cas, le classement des transporteurs dans la liste tient compte de cette note de fiabilité. Cette disposition contribue à la fiabilisation du système de co-voiturage.

Si aucun itinéraire actif n'est trouvé (étape 33), le voyageur est mis en attente pendant une durée prédéterminée, par exemple 2 mn 30 (étape 35), puis le calculateur recherche à nouveau des itinéraires actifs susceptibles de satisfaire la demande du voyageur (étape 32).

Selon une première variante de mise en oeuvre préférée du procédé, le dispositif 10 est constitué par un téléphone mobile et comprend ainsi un transmetteur radiotéléphonique 12, par exemple de type GSM relié à une antenne 23, un clavier 25, un microphone 19 et un haut-parleur 16. Dans ce cas, la base de données 4 contient également les numéros d'appel de ces téléphones en association avec les autres informations concernant les transporteurs abonnés.

On peut prévoir dans ce cas que les transporteurs doivent avertir le centre de supervision lorsqu'ils désirent prendre en charge un ou plusieurs voyageurs, de manière à rendre un itinéraire actif. Cet avertissement peut être déclenché au moyen d'une touche du clavier 25 prévue à cet effet, qui est actionnée par le transporteur, éventuellement après avoir introduit le numéro de l'itinéraire qu'il souhaite suivre avec le sens de parcours. Cette opération déclenche l'émission vers le centre de supervision d'un message contenant l'identification du transporteur, et éventuellement le numéro de l'itinéraire envisagé. Dans le cas où aucun numéro d'itinéraire n'est indiqué dans le message, cela signifie que l'itinéraire à activer est celui dont la plage horaire associée correspond à l'heure courante.

Selon une autre variante de l'invention, dans le cas d'une demande de transport immédiate, le calculateur 5 effectue en outre une localisation des transporteurs correspondant aux itinéraires actifs trouvés pour contrôler que ces itinéraires sont effectivement actifs. Cette localisation peut par exemple être effectuée d'une manière connue, par le système de téléphonie mobile en effectuant une triangulation par les balises ou stations de base du système recevant un signal du téléphone mobile. Un tel procédé de triangulation permet d'atteindre une précision de l'ordre de 5 m dans une ville où la densité des balises est importante.

La liste des transporteurs sélectionnés comprend alors en outre les numéros des téléphones mobiles des transporteurs sélectionnés que le calculateur 2 appelle pour déterminer un transporteur en mesure de satisfaire la demande de transport correspondante (étape 34). Ces appels peuvent être simultanés de manière à limiter le temps d'attente du voyageur qui est alors en communication avec le centre de supervision. Lorsqu'un transporteur décroche son téléphone, un message vocal est transmis par le calculateur 2 à l'aide d'un dispositif de synthèse vocale 8, informant le transporteur qu'un voyageur a émis une demande de transport correspondant à son itinéraire. Si le transporteur est d'accord pour prendre en charge la demande de transport en question, il doit presser une touche de son téléphone prévue à cet effet. Si plusieurs transporteurs reçoivent ce message, c'est le premier transporteur qui répond qui est sélectionné.

Si aucun transporteur ne peut satisfaire la demande du voyageur (étape 37), par exemple parce que toutes les tentatives d'appel de ceux-ci sont restées sans réponse, ou qu'aucun transporteur ne peut prendre en charge le voyageur, celui-ci est mis en attente à l'étape 35 et averti qu'il sera appelé à nouveau par exemple 15 mn plus tard si un transporteur est trouvé. Le temps d'attente est par exemple fixé à2mn30.

Dans le cas contraire, le voyageur et le transporteur sont avertis par un message vocal émis par le calculateur 2 qu'ils vont être mis en relation, puis cette mise en relation est effectuée (étape 38), pour que le voyageur et le transporteur établissent un point et une heure de rencontre et échangent des informations permettant de se repérer (description du véhicule du transporteur). A la fin d'une période prédéterminée le calculateur met en relation une opératrice du centre de supervision avec le voyageur ou le transporteur de manière à obtenir les termes de la prise en charge (lieu et heure de rendez-vous) qui sont introduits par l'opératrice dans le calculateur (étape 39). On peut aussi prévoir que la mise en relation avec une opératrice soit effectuée pendant la communication du voyageur avec le transporteur sélectionné. Puis le calculateur 2 met fin à la communication après avoir envoyé au voyageur un message de fin d'entremise lui indiquant les termes du rendez-vous prévu, à savoir le lieu et l'heure de prise en charge, les signes distinctifs permettant de reconnaître le transporteur, et éventuellement le numéro de téléphone de ce dernier.

Bien entendu, les messages envoyés au transporteur peuvent aussi lui être communiqués sur l'afficheur 17.

Dans le cas où l'on effectue une localisation par triangulation dans le système de téléphonie mobile, on peut prévoir d'offrir aux transporteurs une fonction de radioguidage personnalisée, et également d'informer les voyageurs sur l'heure de leur prise en charge effective en fonction de la position du transporteur. Dans ce cas, le calculateur 2 du centre de supervision reçoit les informations de trafic routier de la zone géographique qu'il contrôle, et puisqu'il connaît les itinéraires en cours des transporteurs, il peut informer les transporteurs sur la présence d'éventuels bouchons sur leur itinéraire et leur transmettre des itinéraires de contournement. En ce qui concerne l'heure de prise en charge d'un voyageur, le centre de supervision peut évaluer en fonction de la distance et de la densité du trafic routier, l'heure exacte de cette prise en charge.

Le calculateur 2 du centre de supervision surveille également que les prises en charges de voyageurs prévues sont effectuées aux horaires prévus. A cet effet, à l'étape 40, il active un timer de surveillance de rendez-vous qui expire à l'heure prévue de rendez-vous avec éventuellement une marge d'erreur de quelques minutes.

Lorsqu'un transporteur prend en charge un voyageur,-il déclenche l'émission d'un message de prise en charge vers le calculateur 2. Si ce message est reçu par le calculateur 2 avant que le timer expire (étape 41), le calculateur 2 désactive le timer (étape 42). Si le timer expires avant que le calculateur 2 reçoive le message de prise en charge correspondant, le calculateur 2 procède au traitement de la défaillance de prise en charge (étape 44).
Ainsi par exemple, lorsqu'une entremise est en défaut ou défaillante, le calculateur déclenche l'émission de message d'alerte à destination des transporteurs défaillants ou en retard, et éventuellement met automatiquement en relation une opératrice du centre de supervision avec le transporteur défaillant pour analyser la situation et tenter une médiation avec le voyageur en attente.

Avantageusement, le calculateur 11 du dispositif 10 est programmé pour pouvoir introduire le nombre de kilomètres parcourus, le coût kilométrique étant automatiquement programmé dans le calculateur embarqué 10 de manière à s'assurer que tous les transporteurs abonnés utilisent le même. L'introduction du nombre de kilomètres parcourus et l'activation d'une touche prévue à cet effet du clavier 25 déclenche l'affichage sur l'afficheur 17 du montant correspondant à payer par le voyageur.

Le coût kilométrique peut avantageusement être mis à jour automatiquement par le calculateur 2, par l'envoi d'un message de mis à jour émis à tous les dispositifs 10 des transporteurs abonnés. On est ainsi assuré que tous les transporteurs utilisent la même valeur du coût kilométrique.

Alternativement, on peut prévoir l'introduction au moyen du clavier 25 des numéros des points de rencontre et de destination, la mémoire 15 stockant les distances et les montants à payer correspondant au transport entre tous les points de rencontre répertoriés. La mémoire 15 peut alternativement stocker la position géographique de tous ces points, le calculateur 11 calculant la distance et le montant à payer lors de l'introduction des numéros des points de rencontre et de destination au moyen du clavier 25.

Selon une autre particularité de l'invention, le dispositif embarqué 10 comprend un lecteur 14 de carte à puce 22 connecté au calculateur 11, dans lequel le voyageur pris en charge par le transporteur doit introduire une carte à puce de paiement. Cette carte peut être soit de type porte-monnaie électronique contenant un certain nombre d'unités qui sont décomptées à chaque utilisation, soit de type carte privative ou carte bancaire. Dans ce dernier cas, une fois que la carte est introduite, le voyageur introduit le code secret de la carte au moyen du clavier 25.

L'introduction de la carte à puce du voyageur dans le lecteur 14 est effectuée au moment de la prise en charge du voyageur pour en vérifier l'authenticité, ce qui déclenche l'émission d'un message de prise en charge attendu par le calculateur 2 du centre de supervision à l'étape 41, ce message comprenant notamment un identifiant du transporteur (par exemple son numéro de téléphone), et un identifiant du voyageur (par exemple son numéro de carte à puce).

Il est à noter que le transporteur peut prendre en charge plusieurs voyageurs à la fois. Dans ce cas, il suffit de noter à chaque prise en charge d'un voyageur la valeur affichée au compteur kilométrique du véhicule. A chaque fois qu'un voyageur arrive à destination, il effectue le paiement de la course en introduisant sa carte à puce dans le lecteur 14 et le code correspondant à la carte au moyen du clavier.
Ce paiement marque la fin de la prise en charge et fait l'objet de la transmission vers le calculateur 2 d'un message de fin de prise en charge contenant les identifiants du transporteur et du voyageur et la transaction de paiement.

Lorsqu'un transporteur souhaite prendre en charge un voyageur, il l'indique au centre de supervision 1 en commandant au moyen du clavier 25 l'émission par le transmetteur 12 d'un message de disponibilité contenant l'identification du transporteur, le numéro de l'itinéraire choisi parmi les itinéraires décrits en association avec son abonnement, ainsi que son sens de parcours (par exemple "A" pour l'aller et "R" pour le retour) et l'heure prévue de départ, ces informations étant introduites au moyen du clavier 25 sur demande du calculateur 11. Lorsque le transmetteur 3 reçoit un tel message de disponibilité, le calculateur 2 met à jour la base de données 4 avec les informations reçues en marquant dans la base de données 4 l'itinéraire ainsi désigné par le transporteur et en associant à cet itinéraire la plage horaire transmise dans le message.

Les voyageurs peuvent s'abonner auprès du centre de supervision pour disposer d'un dispositif de radio-messagerie ou d'un téléphone mobile, auquel les informations d'entremise qui lui sont destinées sont transmises pour y être affichées.
Le numéro d'appel du transmetteur 12 du transporteur sélectionné peut ainsi être communiqué de cette manière par le centre de supervision 1 au voyageur dans le message de fin de confirmation d'entremise qui est enregistré dans la mémoire du dispositif de radio-messagerie ou téléphone. Le voyageur peut alors appeler directement son transporteur pour lui demander par exemple de lui préciser l'heure exacte de la prise en charge ou éventuellement de modifier le lieu de rencontre.

On peut en outre prévoir un dispositif permettant soit au transporteur, soit au voyageur de transmettre au centre de supervision, éventuellement à l'insu de l'autre, un message d'alarme, par exemple en cas d'accident ou d'agression. Ce dispositif peut par exemple être constitué par une touche du téléphone mobile programmée à cet effet pour envoyer d'une manière répétitive un message contenant le numéro de l'appelant. Le système de téléphonie mobile peut alors localiser l'appelant par triangulation des balises.

## Revendications

1. Procédé pour la mise en relation d'une demande d'un service de transport émise par un voyageur avec une offre d'un tel service émise par un transporteur équipé d'un dispositif transmetteur téléphonique embarqué (10), ce procédé faisant intervenir un centre de supervision (1) comprenant un calculateur (2) relié à des moyens de transmission (3) de données et une mémoire de masse (4) pouvant être une base de données (4) d'abonnés dans laquelle chaque abonné est identifié, ledit procédé comprenant les étapes successives suivantes :
• (a) l'abonnement des transporteurs auprès du centre de supervision (1) et la mémorisation lors de cet abonnement dans la base de données (4), au moyen du calculateur (2), d'informations concernant les transporteurs désirant prendre des voyageurs sur l'un des itinéraires desdits transporteurs,
• (b) la transmission par un voyageur au calculateur (2) d'une demande de transport comprenant l'identification d'un lieu de départ et d'un lieu d'arrivée et d'une date et d'une heure de prise en charge souhaitée,
• (c) la constitution par le calculateur (2) d'une liste de transporteurs abonnés, susceptibles de satisfaire la demande de transport reçue,
• (d) la détermination, à partir de ladite liste, d'un transporteur pouvant prendre en charge la demande de transport,
• (e) la mise en communication du voyageur avec ce transporteur trouvé pour fixer un lieu et une date de rendez-vous avec ce dernier,
• (f) lors de la rencontre entre ce transporteur trouvé et le voyageur, la détermination de la distance parcourue et du prix du trajet que doit payer le voyageur au transporteur en fonction des lieux de départ et de destination de la demande de transport,
**caractérisé en ce que** :
• lors de l'étape de détermination (d), l'appel dans l'ordre de la liste, des transporteurs qui figurent sur ladite liste et qui sont équipés de dispositifs embarqués (10) est effectué par le centre de supervision (1) jusqu'à ce qu'il trouve un transporteur qui accepte de satisfaire la demande de transport ; cette liste est établie en fonction :
• de la date et de l'heure de prise en charge indiquées dans ladite demande de transport du voyageur,
• du lieu de départ et du lieu d'arrivée de prise en charge indiqués dans ladite demande de transport du voyageur,
• d'itinéraires habituels des transporteurs associés à des plages horaires et des sens de parcours de ces itinéraires, ces données étant comprises dans les informations concernant les transporteurs qui ont été communiquées lors de l'étape d'abonnement,
• de la localisation périodique du dispositif transmetteur téléphonique embarqué (10) de chaque transporteur de ladite liste, le calculateur (2) déterminant la position du transporteur par rapport au point de rencontre prévu entre le transporteur et le voyageur, et l'estimation de l'heure de la prise en charge du voyageur par le transporteur,
cette étape de détermination pouvant être répétée dans le cas où ledit transporteur trouvé et le voyageur ne parviennent pas à trouver un accord concernant les modalités du trajet ;
en outre, chaque abonné est associé à au moins un tracé d'un itinéraire, et la base de données concernant les transporteurs comporte une liste d'itinéraires habituels associés à des plages horaires avec des sens de parcours de ces itinéraires.

2. Procédé selon la revendication 1,
**caractérisé en ce que** le véhicule de chaque transporteur abonné est équipé d'un dispositif embarqué (10) comprenant un transmetteur radiotéléphonique (12), le procédé comprenant en outre le déclenchement par le transporteur de l'émission par le transmetteur (12) vers le calculateur (2) du centre de supervision (1), d'un message contenant une information d'identification du transporteur disposé à prendre en charge une demande de transport et éventuellement un numéro d'itinéraire prédéterminé, la détermination du transporteur qui prendra en charge la demande de transport comprenant la transmission par le calculateur (2) d'un message décrivant la demande de transport à l'ensemble des transporteurs qui figurent dans la liste élaborée par le centre de supervision, le déclenchement par l'un des transporteurs ayant reçu la demande de transport de la transmission au calculateur (2) d'un message indiquant qu'il prend en charge la demande de transport, et la mise en communication par le calculateur (2) du transporteur avec le voyageur pour définir les termes d'un rendez-vous, et échanger des informations permettant au voyageur de reconnaître le transporteur qui le prend en charge.

3. Procédé selon la revendication 1,
**caractérisé en ce qu'**il comprend en outre le contrôle par le calculateur (2) que chaque transporteur se trouve bien sur l'itinéraire qu'il a indiqué à l'aide de la localisation effectuée, et le retrait des transporteurs des listes des transporteurs susceptibles de satisfaire les demandes de transport reçues, lorsque ceux-ci ne sont plus sur l'itinéraire indiqué.

4. Procédé selon l'une des revendications précédentes,
**caractérisé en ce qu'**il comprend la détermination par le calculateur (2) et l'indication au voyageur de l'heure de sa prise en charge par un transporteur.

5. Procédé selon l'une des revendications précédentes,
**caractérisé en ce que** le dispositif embarqué (10) à bord de chaque véhicule de transporteur abonné est équipé d'un terminal (14) de paiement par carte à puce, le procédé comprenant le paiement par carte à puce du transport par le voyageur au transporteur.

6. Procédé selon l'une des revendications précédentes,
**caractérisé en ce que** pour déterminer les transporteurs susceptibles de satisfaire une demande de transport émise par un voyageur, il comprend en outre la sélection de transporteurs abonnés dont l'itinéraire peut satisfaire la demande de transport en combinaison avec un moyen de transport en commun.

7. Procédé selon l'une des revendications précédentes,
**caractérisé en ce que** la fourniture au calculateur (2) par chaque transporteur abonné d'une liste d'itinéraires comprend le déplacement d'un curseur le long de chaque itinéraire sur une carte numérisée affichée sur l'écran d'un ordinateur.

8. Dispositif pour la mise en oeuvre du procédé selon l'une des revendications précédentes,
**caractérisé en ce qu'**il comprend :
- un centre de supervision (1) comprenant un calculateur (2) relié à des moyens de transmission (3) tels qu'un transmetteur (3), de préférence capable de recevoir une grande quantité de messages numériques et vocaux, et une mémoire de masse (4) dans laquelle est stockée une base de données (4) contenant toutes les informations relatives aux transporteurs abonnés,
- à bord de chaque véhicule de transporteur abonné, un dispositif transmetteur téléphonique embarqué (10) comprenant dans un boîtier, un calculateur (11), et connecté à celui-ci, une mémoire non volatile (15), un afficheur (17) et un clavier (25), le calculateur (2) du centre de supervision (1) étant équipé d'un moteur de recherche capable de déterminer les meilleurs itinéraires de transporteurs mémorisés dans la mémoire (4) susceptibles de satisfaire une demande de transport reçue.

9. Dispositif selon la revendication 8,
**caractérisé en ce que** le calculateur (2) du centre de supervision (1) est connecté à un système de signalisation de trafic routier qui fournit la durée de déplacement entre deux points compte tenu de la densité du trafic, pour fournir une estimation précise de l'heure d'une prise en charge.

10. Dispositif selon l'une des revendications 8 et 9,
**caractérisé en ce que** le clavier (25) est externe et relié au calculateur (11) par l'intermédiaire d'une liaison infrarouge (26).

11. Dispositif selon l'une des revendications 8 à 10,
**caractérisé en ce que** le dispositif embarqué (10) comprend au moins un lecteur (14) de carte à puce (22) connecté au calculateur (11), dans lequel le voyageur pris en charge par le transporteur doit introduire une carte à puce de paiement.

12. Dispositif selon l'une des revendications 8 à 11,
**caractérisé en ce que** le dispositif embarqué (10) comprend un transmetteur radiotéléphonique (12), relié à une antenne (23), à un microphone (19) et un haut-parleur (16).

## Claims

1. A method for putting a request for a transport service issued by a traveler in touch with an offer from such a service issued by a driver equipped with an onboard telephonic transmitter device (10), this method involving a supervision center (1) comprising a computer (2) connected to data transmission means (3) and auxiliary storage (4) which may be a subscriber database (4) in which each subscriber is identified, said method comprising the following successive steps:
• (a) subscription of drivers with the supervision center (1) and the storage during this subscription in the database (4), using the computer (2), of information concerning the drivers wishing to take travelers on one of the routes of said drivers,
• (b) transmission by a traveler to the computer (2) of a transport request including the identification of a departure location and an arrival location and a desired pick-up date and time,
• (c) compilation by the computer (2) of a list of subscribing drivers capable of meeting the received transport request,
• (d) determining, from said list, a driver able to fulfill the transport request,
• (e) putting the traveler in contact with this identified driver in order to set a meeting place and time with the latter,
• (f) during the meeting between this identified driver and the traveler, determining the distance traveled and the price of the journey which the traveler must pay the driver according to the departure and destination locations of the transport request,
**characterized in that**:
• during the determination step (d), the calling, in the order of the list, of drivers who appear on said list and who are equipped with onboard devices (10) is done by the supervision center (1) until it finds a driver which agrees to meet the transport request; this list is established according to:
• the pick-up date and time indicated in said travel request from the traveler,
• the pick-up departure and arrival locations indicated in said travel request from the traveler,
• regular routes of the drivers in relation with time slots and directions of travel for these routes, this data being combined in the information concerning the drivers which was communicated during the subscription step,
• periodic localization of the onboard telephonic transmitter device (10) of each driver on said list, the computer (2) determining the position of the driver in relation to the anticipated meeting point between the driver and the traveler, and estimating the pick-up time of the traveler by the driver,
this determination step being able to be repeated in the event said identified driver and the traveler do not manage to reach an agreement concerning the terms of the journey;
moreover, each subscriber is associated with at least one line of a route, and the drivers database comprises a list of regular routes in connection with time slots with the directions of travel of these routes.

2. The method according to claim 1,
**characterized in that** the vehicle of each subscribing driver is equipped with an onboard device (10) comprising a radiotelephonic transmitter (12), the method also including the triggering by the driver of the transmission by the transmitter (12) to the computer (2) of the supervision center (1), of a message containing information identifying the driver willing to take charge of a transport request and possibly a predetermined route number, the determination of the driver who will take charge of the transport request including the transmission by the computer (2) of a message describing the transport request to all of the transporters who appear on the list compiled by the supervision center, the triggering by one of the drivers having received the transport request of the transmission to the computer (2) of a message indicating that he will take charge of the transport request, and the putting in contact by the computer (2) of the driver with the traveler in order to define the terms of a meeting, and exchange information allowing the traveler to recognize the driver picking him up.

3. The method according to claim 1,
**characterized in that** it also comprises verification by the computer (2) that each driver is indeed on the route he has indicated using the localization done, and the removal of drivers from the list of drivers capable of meeting the received transport request, when these drivers are no longer on the indicated route.

4. The method according to one of the preceding claims,
**characterized in that** it comprises the determination by the computer (2) and indication to the traveler of the pick-up time by a driver.

5. The method according to one of the preceding claims,
**characterized in that** the onboard device (10) onboard each subscribing driver's vehicle is equipped with a terminal (14) for payment by chip card, the method comprising the payment by chip card to the driver by the traveler for the transportation.

6. The method according to one of the preceding claims,
**characterized in that** in order to determine the drivers capable of meeting a transport request issued by a traveler, it also includes the selection of subscribing drivers whose route may meet the transport request in combination with a public transit means.

7. The method according to one of the preceding claims,
**characterized in that** the provision to the computer (2) by each subscribing driver of a list of routes comprising the movement of a curser along each route on a digital map displayed on a computer screen.

8. A device for the implementation of the method according to one of the preceding claims,
**characterized in that** it comprises:
- a supervision center (1) comprising a computer (2) connected to transmission means (3) such as a transmitter (3), preferably capable of receiving a large number of digital and voice messages, and auxiliary storage (4) in which a database (4) is stored, this database containing all of the information relative to the subscribing transporters,
- onboard each subscribing driver's vehicle, an onboard telephonic transmitter device (10) comprising, in a case, a computer (11), and connected thereto, a non-volatile memory (15), a viewer (17) and a keyboard (25), the computer (2) of the supervision center (1) being equipped with a search engine capable of determining the best driver routes stored in the memory (4) capable of meeting a received transport request.

9. The device according to claim 8,
**characterized in that** the computer (2) of the supervision center (1) is connected to a road traffic signaling system which provides the duration of travel between two points given the density of the traffic, in order to provide a precise estimate of the time for a pick-up.

10. The device according to one of claims 8 and 9,
**characterized in that** the keyboard (25) is external and connected to the computer (11) via an infrared connection (26).

11. The device according to one of claims 8 to 10,
**characterized in that** the onboard device (10) comprises at least one chip card (22) reader (14) connected to the computer (11), in which the traveler picked up by the driver must introduce a chip card for payment.

12. The device according to one of claims 8 to 11,
**characterized in that** the onboard device (10) comprises a radiotelephonic transmitter (12), connected to an antenna (23), microphone (19) and loudspeaker (16).

## Patentansprüche

1. Verfahren zur Herstellung einer Verbindung zwischen einer von einem Fahrgast abgesendeten Anforderung einer Transportdienstleistung und dem von einem Transportdienstleister abgesendeten Angebot einer derartigen Dienstleistung, wobei der Transportdienstleister mit einem im Fahrzeug angeordneten Fernsprech-Sendegerät (10) ausgerüstet ist und dieses Verfahren ein Kontrollzentrum (1) benutzt, welches einen mit Datenübertragungsmitteln (3) verbundenen Rechner (2) und einen Massenspeicher (4) umfasst, der eine Datenbasis (4) für die Teilnehmer bilden kann, in welcher jeder Teilnehmer identifiziert ist, wobei das besagte Verfahren die folgenden, aufeinander folgenden Schritte umfasst:
a) Die Anmeldung der in der Nähe des Kontrollzentrums (1) befindlichen Transportdienstleister und anlässlich dieser Anmeldung die Einspeicherung von Informationen betreffend die Transportdienstleister, welche Fahrgäste auf einer der Fahrstrecken des besagten Transportdienstleisters mitnehmen möchten, mittels des Rechners (2) in die Datenbasis (4);
b) die Übermittlung einer Transportanforderung, welche die Identifizierung eines Abfahrtortes und eines Ankunftsortes sowie eines Datums und eines gewünschten Übernahmezeitpunkts umfasst, von einem Fahrgast an den Rechner (2);
c) die Erstellung einer Liste der teilnehmenden Transportdienstleister, welche in der Lage sind, die erhaltene Transportanforderung zu erfüllen, mittels des Rechners (2);
d) ausgehend von der besagten Liste die Bestimmung eines Transportdienstleisters, der die Transportanforderung übernehmen kann;
e) das Herstellen einer Verbindung zwischen dem Fahrgast und diesem aufgefundenen Transportdienstleister, um einen Ort und einen Zeitpunkt für ein Treffen mit dem Letzteren festzulegen;
f) beim Treffen zwischen diesem aufgefundenen Transportdienstleister dem Fahrgast die Bestimmung der durchfahrenen Entfernung und des Fahrpreises, den der Fahrgast dem Transportdienstleister in Abhängigkeit vom Ort der Abfahrt und des Zieles der Transportanforderung zahlen soll;
**dadurch gekennzeichnet, dass**
• beim Bestimmungsschritt (d) der Anruf bei den Transportdienstleistern, die auf der besagten Liste erscheinen und die mit im Fahrzeug angeordneten Geräten (10) ausgerüstet sind, in der Reihenfolge der Liste vom Kontrollzentrum (1) aus durchgeführt wird bis es einen Transportdienstleister findet, der bereit ist, die Transportanforderung zu erfüllen, wobei diese Liste erstellt wird in Abhängigkeit von:
■ dem Datum und dem Zeitpunkt der in der besagten Transportanforderung des Fahrgasts angegebenen Übernahme,
■ dem in der besagten Transportanforderung des Fahrgastes angegebenen Abfahrtsort und dem Ankunftsort der Übernahme,
■ der üblichen Fahrstrecke der Transportdienstleister verbunden mit Zeitbereichen und Fahrtrichtungen dieser Fahrstrecken, wobei diese Daten in den die Transportdienstleister betreffenden Informationen enthalten sind, welche beim Schritt der Anmeldung mitgeteilt worden sind,
■ der periodischen Lokalisation des im Fahrzeug angeordneten Fernsprech-Sendegeräts (10) jedes Transportdienstleisters der besagten Liste, wobei der Rechner (2) die Position des Transportdienstleisters im Verhältnis zum vorgesehenen Treffpunkt zwischen dem Transportdienstleister und dem Fahrgast sowie die Schätzung des Zeitpunktes der Übernahme des Fahrgastes durch den Transportdienstleister bestimmt und
wobei dieser Bestimmungsschritt in dem Fall wiederholt werden kann, wo es dem besagten aufgefundenen Transportdienstleister und dem Fahrgast nicht gelingt, ein Übereinkommen bezüglich der Modalitäten der Fahrt zu finden;
und außerdem jeder Teilnehmer mindestens einem Verlauf einer Fahrstrecke zugeordnet ist und die Datenbasis betreffend die Transportdienstleister eine Liste üblicher Fahrstrecken verbunden mit Zeitbereichen und Fahrtrichtungen dieser Fahrstrecken enthält.

2. Verfahren nach Anspruch 1,
**dadurch gekennzeichnet, dass** das Fahrzeug jedes teilnehmenden Transportdienstleisters mit einem im Fahrzeug angeordneten Gerät (10) ausgerüstet ist, welches einen Funktelefonsender (12) umfasst, und das Verfahren außerdem umfasst die Auslösung der Absendung einer Nachricht durch den Transportdienstleister vom Sender (12) zum Rechner (2) des Kontrollzentrums, die eine Identifikationsinformation des Transportdienstleisters enthält, der bereit ist, eine Transportanforderung zu übernehmen, sowie gegebenenfalls eine vorgegebene Fahrstreckennummer, die Bestimmung des Transportdienstleisters, der die Transportanforderung übernehmen wird, welche die Übertragung mittels des Rechners (2) einer Nachricht umfasst, die die Transportanforderung beschreibt an die Gesamtheit der Transportdienstleister, welche in der vom Kontrollzentrum erstellten Liste erscheinen; die Auslösung einer Nachricht durch einen der Transportdienstleister, der die Transportanforderung empfangen hat, durch Übertragung an den Rechner (2), welche anzeigt, dass er die Transportanforderung übernimmt, und die Herstellung der Verbindung des Transportdienstleisters mit dem Fahrgast durch den Rechner (2), um die Bedingungen eines Treffens zu definieren und Informationen auszutauschen, welche es dem Fahrgast ermöglichen, den Transportdienstleister, der ihn übernimmt, zu erkennen.

3. Verfahren nach Anspruch 1,
**dadurch gekennzeichnet, dass** es außerdem die Überprüfung durch den Rechner (2) umfasst, dass jeder Transportdienstleister sich tatsächlich auf der Fahrstrecke befindet, die er mithilfe der durchgeführten Lokalisierung angezeigt hat, und die Zurückziehung des Transportdienstleisters von den Listen der Transportdienstleister, die in der Lage sind, die empfangenen Transportanforderungen zu erfüllen, wenn diese sich nicht mehr auf der angezeigten Fahrstrecke befinden.

4. Verfahren nach einem der vorhergehenden Ansprüche,
**dadurch gekennzeichnet, dass** es mittels des Rechners (2) für den Fahrgast die Bestimmung und Anzeige des Zeitpunkts seiner Übernahme durch einen Transportdienstleister umfasst.

5. Verfahren nach einem der vorhergehenden Ansprüche,
**dadurch gekennzeichnet, dass** das an Bord jedes Fahrzeugs der teilnehmenden Transportdienstleister angeordnete Gerät mit einem Terminal (14) für die Bezahlung mittels Chipkarte versehen ist, wobei das Verfahren die Bezahlung des Transports durch den Fahrgast an den Transportdienstleister mittels Chipkarte umfasst.

6. Verfahren nach einem der vorhergehenden Ansprüche,
**dadurch gekennzeichnet, dass** es zur Bestimmung der Transportdienstleister, die in der Lage sind, eine von einem Fahrgast gesendete Transportanforderung zu erfüllen, außerdem die Auswahl der teilnehmenden Transportdienstleister, deren Fahrstrecke die Transportanforderung erfüllen kann, in Kombination mit einem öffentlichen Verkehrsmittel umfasst.

7. Verfahren nach einem der vorhergehenden Ansprüche,
**dadurch gekennzeichnet, dass** die Zuführung einer Liste von Fahrstrecken von jedem teilnehmenden Transportdienstleister zum Rechner (2) die Verschiebung eines Cursors entlang jeder Fahrstrecke auf einer digitalisierten auf dem Bildschirm einer Datenverarbeitungsanlage dargestellten Karte umfasst.

8. Vorrichtung zur Durchführung des Verfahrens nach einem der vorhergehenden Ansprüche,
**dadurch gekennzeichnet, dass** sie Folgendes umfasst:
- ein Kontrollzentrum (1), das einen Rechner (2) enthält, der mit Übertragungsmitteln (3) wie einem Sender (3) verbunden ist, welcher vorzugsweise in der Lage ist, eine große Menge an Digital- und Sprach-Nachrichten zu empfangen, und einen Massenspeicher (4), in dem eine Datenbasis (4) gespeichert ist, welche alle Informationen in Bezug auf die teilnehmenden Transportdienstleister enthält;
- an Bord jedes Fahrzeugs eines teilnehmenden Transportdienstleisters ein im Fahrzeug angeordnetes Fernsprech-Sendegerät (10), welches in einem Gehäuse einen Rechner (11) enthält, sowie mit diesem verbunden einen nicht-flüchtigen Speicher (15), ein Anzeigegerät (17) und eine Tastatur (25), wobei der Rechner (2) des Kontrollzentrums (1) mit einer Suchmaschine ausgerüstet ist, die in der Lage ist, die besten im Speicher (4) eingespeicherten Fahrstrecken der Transportdienstleister zu bestimmen, die in der Lage sind, eine empfangene Transportanforderung zu erfüllen.

9. Vorrichtung nach Anspruch 8,
**dadurch gekennzeichnet, dass** der Rechner (2) des Kontrollzentrums (1) mit einem Meldesystem für Straßenverkehr verbunden ist, welches die Fahrzeit zwischen zwei Punkten unter Berücksichtigung der Verkehrsdichte angibt, um eine genaue Schätzung des Zeitpunktes einer Übernahme zu liefern.

10. Vorrichtung nach einem der Ansprüche 8 oder 9,
**dadurch gekennzeichnet, dass** die Tastatur (25) extern angeordnet und mit dem Rechner (11) über eine zwischenliegende Infrarotstrecke (26) verbunden ist.

11. Vorrichtung nach einem der Ansprüche 8 bis 10,
**dadurch gekennzeichnet, dass** das im Fahrzeug angeordnete Gerät (10) mindestens ein mit dem Rechner (11) verbundenes Lesegerät (14) für Chipkarten (22) aufweist, in welches der vom Transportdienstleister übernommene Fahrgast eine Chipkarte zur Bezahlung einführen soll.

12. Vorrichtung nach einem der Ansprüche 8 bis 11,
**dadurch gekennzeichnet, dass** das im Fahrzeug angeordnete Gerät (10) einen Funktelefonsender (12) umfasst, der mit einer Antenne (23), einem Mikrofon (19) und einem Lautsprecher (16) verbunden ist.
